# EUROPEAN PATENT APPLICATION

(11) **EP 2 680 164 A1**
(43) Date of publication of application: **01.01.2014**
(21) Application number: 12360049.6
(22) Date of filing: 28.06.2012
(51) Int. Cl.: G06F 17/30

(54) **Content data interaction**

(71) Applicant: Alcatel Lucent, 75007 Paris (FR)
(72) Inventor: Shalliker, Stephan J., Plymouth, Devon PL9 8BW (GB)
(74) Representative: Sarup, David Alexander

(57) **Abstract**

A method of providing interaction options to a user consuming content data, a content delivery apparatus operable to provide interaction options to a user consuming content data and a computer program product are disclosed. The method comprising the steps of: receiving an indication that the user requested interaction options for a class of features within the content data being consumed by the user; recognising instances of the class of features within the content data being consumed by the user; and identifying the instances to the user together with at least one interaction option associated with the instances. This approach enables the interactivity options or metadata to be generated dynamically as the content is being consumed, rather than relying on this information being pre-generated and then having to be associated with each occurrence within the content data. This significantly reduces the burden on the content provider. This also enables interactivity options or metadata to be generated for existing content data for which no such information was pre-generated. This also enables the interaction options or other metadata to evolve based on the user's requirements.

## Description

### FIELD OF THE INVENTION

The present invention relates to a method of providing interaction options to a user consuming content data, a content delivery apparatus operable to provide interaction options to a user consuming content data and a computer program product.

### BACKGROUND

Content data, such as video, audio, image or other data is typically produced to be consumed or experienced by users. Traditionally, users consumed that content data in a generally passive manner. With the advent of interactive services, the demands and expectations of users when consuming or experiencing content data has increased and there is an expectation on the part of users that it is possible to interact with the content data being consumed.

Although techniques exist to enable users to interact with content data, they each have their own shortcomings.

Accordingly, it is desired to provide an improved technique for enabling users to interact with content data.

### SUMMARY

According to a first aspect, there is provided a method of providing interaction options to a user consuming content data, the method comprising the steps of: receiving an indication that the user requested interaction options for a class of features within the content data being consumed by the user; recognising instances of the class of features within the content data being consumed by the user; and identifying the instances to the user together with at least one interaction option associated with the instances.

The first aspect recognizes that a problem with existing techniques is that metadata needs to be pre-generated to enable interaction options such as the presentation of additional information relating to the content data being consumed and/or contextual navigation options to be displayed. For much existing content data, no such metadata exists and would need to be generated. For newly produced content data, pre-generating such metadata is time-consuming. In either event, the metadata is generally incomplete or can become inappropriate with time. This is because a judgment needs to be made on what metadata to include and this judgment can vary over time. Hence, it is difficult to determine in advance what metadata needs to be generated which would be appropriate to the user. Also, that metadata would typically need to be associated with all the relevant parts of the content data being consumed by the user. Again, this is extremely time-consuming.

Accordingly, a method of providing interactivity to a user consuming content data is provided. The method may comprise the step of receiving an indication that the user has requested information or interactivity options for a class or type of features or objects within the content data being consumed or experienced by the user. The method may also comprise the step of recognizing instances all occurrences of the class or types of features or objects within the content data being consumed or experienced by the user. The method may also comprise the step of identifying the instances or examples of the class or type of features or objects within the content being consumed by the user together with one or more interaction options associated with those instances. This approach enables the interactivity options or metadata to be generated dynamically in real time (or near real time) as the content is being consumed, rather than relying on this information being pre-generated and then having to be associated with each occurrence within the content data. This significantly reduces the burden on the content provider. This also enables interactivity options or metadata to be generated for existing content data for which no such information was pre-generated. This also enables the interaction options or other metadata to evolve based on the user's requirements. In addition, the interactivity options or metadata may be generated for later use as content is made available or re-generated periodically to ensure that the interactivity options or metadata remains relevant. These interactivity options or metadata may then be stored or cached to reduce the real time processing burden, particularly where multiple requests for the same content data are made.

In one embodiment, the content data comprises at least one of audio, video and an image. Accordingly, the content data may comprise any media data or multimedia data.

In one embodiment, the content data comprises a stream of content data and the method comprises the step of pausing the stream of content data. It will be appreciated that the stream of content data need not be paused although pausing the content stream ensures that the item of interest to the user remains on the screen.

In one embodiment, the step of recognising comprises recognising instances of the class of features within at least a paused frame of the stream of content data. Accordingly, those instances or examples of the class or type of features or object within the content data may be recognized.

In one embodiment, the class of features comprises a geographical location recognisable from the content data. It will be appreciated that the geographical location may be the actual location that the content data was recorded. This may be derivable from landmark buildings or a recognizable view or panorama.

In one embodiment, the class of features comprises items recorded by the content data.

In one embodiment, the items comprise at least one of characters, people and products.

In one embodiment, the step of recognising comprises recognising using at least one of image and audio recognition on the content data. Accordingly, appropriate recognition may be performed on the content data in order to identify the instances of the objects recorded by the content data.

In one embodiment, the step of recognising comprises referencing a relevance associated with items recognised and dismissing those items recognised having a relevance below a relevance threshold. Accordingly, the only those items which are likely to be instances of the class of features are recognized as such. This reduces the risk of incorrect recognition.

In one embodiment, the step of recognising comprises identifying whether interaction options are associated with items recognised and dismissing those items recognised having no interaction options. Accordingly, only instances which have interaction options are identified to the user. For example, if an object is identified but there are no interaction options for that object, then the object may not be distinguished to the user. This avoids distinguishing objects for which no interactivity options exist.

In one embodiment, the step of recognising comprises providing information relating the content data to a server which performs the recognition and provides an indication of the instances together with an indication of the at least one interaction option associated with the instances. Accordingly, a server may be provided which undertakes the recognition, identifies the instances and/or provides the interaction options associated with those instances. It will be appreciated that this reduces the processing burden of any user equipment or apparatus.

In one embodiment, the information relating the content data comprises at least one of the content data and an identifier identifying the content data. Accordingly, the content data itself or a reference to the content data may be provided to the server. Providing a reference to the content data may reduce the resources required to support communication with the server.

In one embodiment, the step of indicating comprises distinguishing the instances for the user. Accordingly, the recognized instances may be identified to the user. This provides an indication to the user of those instances which have been recognized.

In one embodiment, the step of distinguishing comprises at least one of highlighting, outlining and surrounding the instances within the content data.

In one embodiment, the step of indicating interaction options comprises displaying information associated with each of the instances. Accordingly, the information retrieved relating to the recognized instance may be displayed.

In one embodiment, the step of indicating interaction options comprises displaying at least one link to additional interaction options. Accordingly, one or more links for navigation options to additional information, content and/or interaction options may be provided. This enables the user to interact with further content.

According to a second aspect, there is provided a content delivery apparatus operable to provide interaction options to a user consuming content data, the apparatus comprising: logic operable to receive an indication that the user requested interaction options for a class of features within the content data being consumed by the user; recognition logic operable to recognise instances of the class of features within the content data being consumed by the user; and identification logic operable to identify the instances to the user together with at least one interaction option associated with the instances.

In one embodiment, the content data comprises at least one of audio, video and an image.

In one embodiment, the content data comprises a stream of content data and the logic is operable to pause the stream of content data.

In one embodiment, the recognition logic is operable to recognise instances of the class of features within at least a paused frame of the stream of content data.

In one embodiment, the class of features comprises a geographical location recognisable from the content data.

In one embodiment, the class of features comprises items recorded by the content data.

In one embodiment, the items comprise at least one of characters, people and products.

In one embodiment, the recognition logic is operable to recognise using at least one of image and audio recognition on the content data.

In one embodiment, the recognition logic is operable to referencing a relevance associated with items recognised and to dismiss those items recognised having a relevance below a relevance threshold.

In one embodiment, the recognition logic is operable to identify whether interaction options are associated with items recognised and to dismiss those items recognised having no interaction options.

In one embodiment, the recognition logic is operable to provide information relating the content data to a server which performs the recognition and provides an indication of the instances together with an indication of the at least one interaction option associated with the instances.

In one embodiment, the information relating the content data comprises at least one of the content data and an identifier identifying the content data.

In one embodiment, the identification logic is operable to distinguish the instances for the user.

In one embodiment, the identification logic is operable to distinguish by performing at least one of highlighting, outlining and surrounding the instances within the content data.

In one embodiment, the identification logic is operable to display information associated with each of the instances.

In one embodiment, the identification logic is operable to display at least one link to additional interaction options.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates an example user interaction according to one embodiment; and
Figure 2 illustrates an example network configuration according to one embodiment.

### DESCRIPTION OF THE EMBODIMENTS

### Overview

Before discussing the embodiments in any more detail, first an overview will be provided. As mentioned above, embodiments provide the ability for users to obtain additional information or metadata and to interact with content data which they are experiencing or consuming, even when that content data has not been specifically associated with metadata providing that information. Instead, metadata is generated by analysing the content data and performing recognition techniques on that content data to identify automatically items or features recorded in the content data. Data sources, such as search engines, are then interrogated to identify what the items or features recognized within the content data are likely to be and this information is then utilized to provide additional information regarding those items, as well as further options relating to those items which are available to the user.

This approach enables this additional metadata to be generated when required without needing the content data producer to invest resources creating the metadata. Likewise, any distributor of the content data also does not need to invest resources pre-generating such metadata. Instead, the metadata can be generated when required. This also avoids generating metadata which may only be relevant at the time that the metadata was created. In addition, metadata can be generated for historical content data produced prior to any interactivity being envisaged.

It will be appreciated that metadata is typically generated based on the perception of the creator of that metadata of what metadata is relevant to include or not. Relevance is something that may vary with time and so metadata which is relevant now may have been omitted at the time that any pre-generated metadata was created. For example, a particular location, person or object may not be considered to be relevant and so may not be included in metadata associated with content data when that metadata is pre-generated. However, a location, person or object may become particularly significant and their existence within particular content data may be unknown unless the metadata for that content data is regenerated. By constantly regenerating metadata for the content data as it is consumed, the metadata is generated can remain relevant and up-to-date.

### Example user interaction

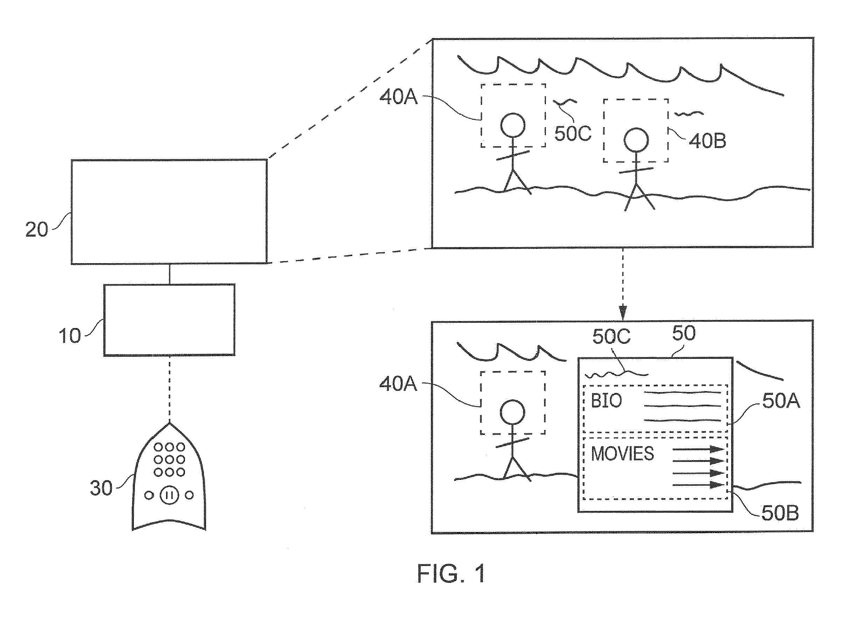

Figure 1 illustrates an example user interaction according to one embodiment. In this example, the user is consuming video content. However, it will be appreciated that the same technique can apply to other content such as audio content or even image content. In this example, the user is viewing a video which is provided by the set top box 10 from a content provider and displays on a display apparatus 20.

The user watches the video content and wishes to find out further information relating to the image or audio being provided by the display apparatus 20. In this example, the user presses a pause button on the controller 30, which instructs the set-top box 10 to pause the content. The user identifies that he wishes to know the names of the actors being displayed, however, it will be appreciated that the user may indicate other classes of types of features of objects for which additional information is required. For example, the user may indicate that he wishes additional information on objects, sounds or other items recorded in the content data, or even the geographical location where the content was recorded. Accordingly, in this example, the set-top box 10 manages the generation of metadata associated with the actors currently being displayed.

The actors which are identified are then highlighted 40a, 40b on the display apparatus 20. In this example, Brad Pitt and John Wayne have been identified as the actors shown on the display apparatus 20. The user may then either continue with the video or may choose one of the highlighted actors 40a, 40b, which prompts the display of additional information 50 which includes, in this example, biographical information 50a and links to additional information 50b. In this example, links are provided to the movies within which that actor appears, however, it will be appreciated that other links or possible user interactions may be provided. If these additional links are selected, then the user may watch those movies, may bookmark them for future viewing or may perform some other interaction.

As mentioned above, although in this example the class of items to be identified within the content is the actors currently shown on the display apparatus 20, it will be appreciated that other classes of features within the content may be classified. For example, the user may request that objects such as branded products or other identifiable items are to be highlighted. Likewise, the user may request that the geographical location indicating where the content was recorded be identified. This information, together with any navigational links, may then be displayed on the display apparatus 20.

Also, although in this example the content is paused, it will be appreciated that this need not be necessary and that the content may continue to be played with the recognizable items continuing to be highlighted as they appear on screen.

It will be appreciated that although a conventional set top box 10, display screen 20 and controller 30 is illustrated, it will be appreciated that these items may be distributed in a different manner or may be combined into a single device such as, for example, a tablet.

### Example network configuration

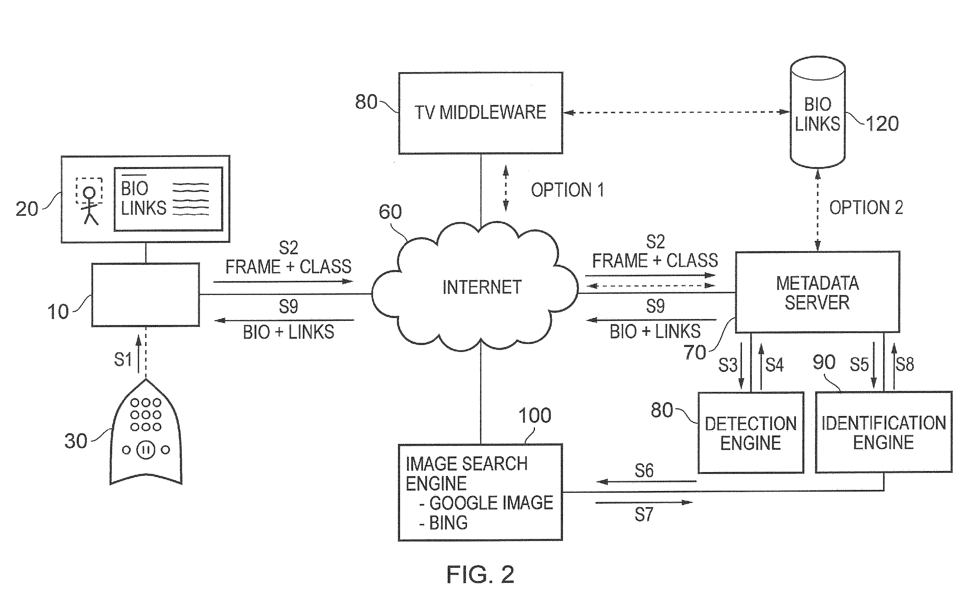

Figure 2 shows an example network configuration according to one embodiment. In this example, the set-top box 10, display screen 20 and controller 30 arrangement is similar to that described above. Also, in a similar manner to that described above, the exact configuration of these items may vary or they may be incorporated into a single device such as a tablet.

As described above, at step S1, the user indicates that they wish additional information associated with the video content data being consumed to be provided. The user is receiving the content data from the TV middleware server 80 provided by a broadcaster. However, it will be appreciated that the user may also receive the content data from elsewhere such as from the internet or from a broadcaster using other delivery media. In this example, the video content data is paused.

At step S2, the set-top box 10 sends a copy of the paused video frame via the Internet 60 to a metadata server 70. Although in this example the set-top box provides a video frame to the metadata server 70 via the internet 60, it will be appreciated that the set-top box 10 may instead simply provide an indication identifying the paused frame and the frame may instead be provided by the TV middleware server 80.

The metadata server 70 then identifies the class of feature to be identified within the content data provided.

At step S3, the metadata server 70 then uses a detection engine 80 which is used to detect instances of that class of features within the content data. In this example, the detection engine 80 is a face detection engine. The detection engine 80 performs image recognition and discards potentially identified faces which fail to achieve a detection probability threshold. It will be appreciated that other detection engines may be provided which perform other than image detection such as audio detection.

At step S4, the detection engine 80 returns the location of the faces within the content data to the metadata server 70. It will be appreciated that different detection engines 80 may be provided for detecting different classes of features or a single detection engine 80 may be provided which can detect each different class of features.

The metadata server 70 then uses this location information to extract the faces from the content data.

At step S5, the faces are provided to an identification engine 90.

The identification engine 90 then, at step S6, sends a search request to an image search engine 100 to identify possible matching images.

At step S7, the image search engine 100 then returns information associated with matching images to the identification engine 90.

At step S8, this information is then passed back to the metadata server 70. Accordingly, the metadata server 70 now has information on the location of detected items within the content data, as well as an indication of what those detected items may be.

In order to obtain the biographical and link information, two main approaches are envisaged both of which utilize a catalogue 120 which contains biographical or other information related to identified instances within the content data, together with appropriate further interaction options.

In an option designated as "Option 1", the catalogue 120 is maintained by the broadcaster providing the TV middleware server 80.

The broadcaster provides information, such as biographical information, relating to instances of features that may occur within their content, together with any appropriate links or other user interaction options. For example, a broadcaster may provide biographical or other information on an actor who features within content that they provide, together with a link to other films that the broadcaster has within their portfolio which also features that actor.

It will be appreciated that although the broadcaster may provide this information or metadata within the catalogue 120, there is no requirement on the broadcaster to link this metadata to every instance of that actor appearing within any of its content (which is clearly a resource-intensive process), but instead this information is available to the metadata server 70 and may be utilized whenever that actor is identified within the content data. Likewise, it will be appreciated that the broadcaster may maintain a list of products for which they may receive payment for providing additional information and the opportunity for those products to be purchased, this may also be maintained within the catalogue 120. Similarly, the broadcaster may maintain a list of identifiable geographical locations and again information may be provided to the user when those locations are recognized following a location request by a user.

In an option designated as "Option 2", the catalogue 120 is instead maintained by the provider of the metadata server 70 and so a direct request can be made by the metadata server 70 to the catalogue 120.

This information and interaction options are collated by the metadata server 70 and provided, at step S9, to the set top box 10 for display on the display 20. The set top box 10 then indicates to the user on the display 20 those recognised instances of the class of features. It will be appreciated that any of a variety of different techniques may be used to distinguish the recognised features such as highlighting, outlining and surrounding those features on the display 20. The user may then indicate whether they require any additional information to be displayed and may utilise any interaction options.

It will be appreciated that in order to reduce processing requirements, the metadata generator 70 may initially only indicate the recognised instances of features to the user and defer the generation and provision of further metadata until the user indicates that they desire that information.

With either option, if no information is returned by the catalogue 120, then even if an item is recognized within the content data, then this item may not be highlighted to the user. It will be appreciated that this helps to reduce the number of items that may be highlighted to the user to a manageable level.

In a further embodiment, either no catalogue 120 is provided or recognized items which are not within the catalogue 120 are still identified to the user and information and links are provided based on search results received using a search engine accessing the Internet 60. The catalogue 120 may then be updated, particularly if the user indicates that the information provided is relevant. This again increases the flexibility by enabling additional information and links to be provided automatically without needing any metadata to be pre-generated.

In another embodiment, the user may identify a particular item within the content data and the identification engine 90 is used to identify the item. Again, should no information exists within the catalogue 120 then a search engine may perform an Internet search to provide any information and associated links that can be displayed to the user. Again, the catalogue 120 may then be updated, particularly if the user indicates that the information provided is relevant.

In another embodiment, the functions of the metadata server 70, the detection engine 80 and the identification engine 90 may are provided by the set top box 10 or another associated item of user apparatus.

Accordingly, it can be seen that embodiments enable real time actor identification from video. In particular, when a user is watching television there is often conversation about who is that actor, what have else have they been in and the like. Embodiments provide a real time solution with an application that, when activated, pauses the television screen, highlights the faces of the actors on the screen and identifies them. A navigational model allows the user to select an identified actor on the screen and get more information. This information could include biography information, current news and a list a list of other media that they have been in. This could include movies and other video content that is also available on the television service, content published on the public internet and other media such as books, compact discs, digital versatile discs available for retail sale. The user can then use this list to mark content for future purchase, show an interest to a recommendation engine, navigate directly to the content or purchase the content for online or retail delivery.

In addition, embodiments can also provide:
- Real time/Near real time identification of the location, landmarks and the like linking onwards to information about the location. Navigate may be provided to other content set in the same location or to retail purchases of pictures or holidays;
- Real time/Near real time identification and highlighting of branded fashion items such as handbags, dresses and the like. This could be linked to product placement metadata;
- Real time/Near Real time identification of cars (or other retail items) and linkage through to advertising micro sites (set of interactive or linear advertising material about the product).

Embodiments provide an approach which:
1) Highlights the actors on the screen;
2) Identifies the names of specific actors in real time;
3) Presents an onward navigational model relating to the actors for purchasing or watching further content.

Embodiments pause the TV screen and identify the current video frame that is being shown. To then access the video frame and submit it for processing:
1) The video frame the end subscriber is watching will be identified and made ready for processing;
2) Software would first identify where the actors are on the screen. This could use face detection software;
3) The identified actors would then be submitted to software that could identify them. This would be achieved using image recognition software, and if necessary metadata associated with the content to narrow down the search.
4) The metadata on the identified actors would then be assembled;
5) The area on the screen to be highlighted would be established;
6) The local software on the set top box would then highlight the designated area on the screen and put up the actors names;
7) The navigational system for choosing between the actors for further information, navigation and purchase opportunities would be put into place;
8) The user gets the opportunity to navigate for more information or restart the video. On restart the highlights and actors information is removed from the screen.

Embodiments provide an application built for digital TV middleware such as Microsoft Mediaroom (trade mark) or MiViewTV (trade mark). The video frame identification software, image recognition software and meta data aggregation software would be built agnostic to the individual TV solution. The front end application visualization of the concept would be specific to the TV system targeted.

Embodiments allow users to identify actors from their on-screen image and then purchase other contents with those actors in. This could generate revenue through onward sales of content, a monthly or one time usage fee or be provided free of charge in order to reduce churn in the service

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

Moreover, all statements herein reciting principles, aspects, and embodiments of the invention, as well as specific examples thereof, are intended to encompass equivalents thereof.

## Claims

1. A method of providing interaction options to a user consuming content data, said method comprising the steps of:
receiving an indication that said user requested interaction options for a class of features within said content data being consumed by said user;
recognising instances of said class of features within said content data being consumed by said user; and
identifying said instances to said user together with at least one interaction option associated with said instances.

2. The method of claim 1, wherein said content data comprises a stream of content data and said method comprises the step of pausing said stream of content data.

3. The method of claim 1 or 2, wherein said step of recognising comprises recognising instances of said class of features within at least a paused frame of said stream of content data.

4. The method of any preceding claim, wherein said class of features comprises items recorded by said content data.

5. The method of any preceding claim, wherein said step of recognising comprises recognising using at least one of image and audio recognition on said content data.

6. The method of any preceding claim, wherein said step of recognising comprises referencing a relevance associated with items recognised and dismissing those items recognised having a relevance below a relevance threshold.

7. The method of any preceding claim, wherein said step of recognising comprises identifying whether interaction options are associated with items recognised and dismissing those items recognised having no interaction options.

8. The method of any preceding claim, wherein said step of recognising comprises providing information relating said content data to a server which performs said recognition and provides an indication of said instances together with an indication of said at least one interaction option associated with said instances.

9. The method of claim 8, wherein said information relating said content data comprises at least one of said content data and an identifier identifying said content data.

10. The method of any preceding claim, wherein said step of indicating comprises distinguishing said instances for said user.

11. The method of any preceding claim, wherein said step of distinguishing comprises at least one of highlighting, outlining and surrounding said instances within said content data.

12. The method of any preceding claim, wherein said step of indicating interaction options comprises displaying information associated with each of said instances.

13. The method of any preceding claim, wherein said step of indicating interaction options comprises displaying at least one link to additional interaction options.

14. A content delivery apparatus operable to provide interaction options to a user consuming content data, said apparatus comprising:
logic operable to receive an indication that said user requested interaction options for a class of features within said content data being consumed by said user;
recognition logic operable to recognise instances of said class of features within said content data being consumed by said user; and
identification logic operable to identify said instances to said user together with at least one interaction option associated with said instances.

15. A computer program product operable, when executed on a computer, to perform the method steps of any one of claims 1 to 13.
